# EUROPEAN PATENT SPECIFICATION

(11) **EP 4 143 072 B1**
(45) Date of publication and mention of the grant of the patent: **11.11.2026**
(21) Application number: 21719232.7
(22) Date of filing: 09.04.2021
(51) Int. Cl.: B62B 3/00, B62B 5/06

(54) **LOAD TRANSPORTING APPARATUS**
APPARAT FÜR LASTTRANSPORT
APPAREIL DE TRANSPORT DE CHARGE

(30) Priority: 01.05.2020 GB 202006491
(43) Date of publication of application: 08.03.2023
(73) Proprietor: M-Mover Holdings Limited, Ashbourne, Derbyshire DE6 1HD (GB)
(72) Inventor: OWEN, Andrew, Ashbourne, Derbyshire DE6 1HD (GB); DANCE, Sam, Ashbourne, Derbyshire DE6 1HD (GB); JONES, James, Ashbourne, Derbyshire DE6 1HD (GB)
(74) Representative: Forresters IP LLP
(86) International application number: PCT/GB2021/050878
(87) International publication number: WO 2021/219975

(56) References cited:
- EP-A2- 0 854 077
- US-A1- 2011 109 054

## Description

This invention relates to a load transporting apparatus. Such apparatus are used to push (forwards movement) or pull (rearwards movement) heavy loads over a ground surface and typically include ground engaging wheels which are driven by a motor to effect said movement. In order to ensure efficient drive, it is sometimes desirable to transmit some of the weight of the load to be moved on to the apparatus and its ground engaging wheels, to ensure a good grip with the ground surface during movement, although this is not necessary.

One prior art apparatus includes a pair of driven ground engaging wheels at or near one (front) end of a main body of the apparatus which are mounted for rotation about a common axis which is substantially parallel with the ground surface. This pair of wheels is driven by a motor. At or near an opposite (rear) end of the apparatus there is provided an assembly supporting third wheel which is rotatable about a respective axis (again substantially parallel with the ground surface) and which is moveable about a generally vertical axis so as to provide a form of steering for the apparatus. The apparatus includes a handle or tiller arm which is graspable by a user and which is pivotally connected to the main body. The handle or tiller arm is connected directly or indirectly to the wheel assembly and is pivotally moveable about an axis which intersects the rotational axis of the third wheel. Pivotal movement of the handle or tiller arm relative to the main body of the apparatus therefore controls the angular position of the third wheel relative to the main body and, in this way, the direction of movement of the apparatus can be controlled by the user by moving the handle or tiller arm. In this way, the third wheel actively assists with the steering of the apparatus because it is connected directly or indirectly to the handle or tiller arm. During all steering movements, the handle or tiller arm and the third wheel both sit in the same generally vertical plane. Such an apparatus is advantageous when operating in tight working spaces because of the pivotability of the handle or tiller arm relative to the main body and requires minimal user energy to effect a steering change, but is generally more expensive to manufacture. For such an apparatus, when pushing a load it means that it forces the apparatus to pivot about the active steering wheel which, if there is a pivot between the apparatus and a load being pushed, creates a double pivot effect reducing controllability meaning that it can be hard to control and require changing direction to straighten to change steering direction.

Another prior art apparatus includes a pair of driven ground engaging wheels at or near one (front) end of a main body of the apparatus which are mounted for rotation about a common axis which is substantially parallel with the ground surface. This pair of wheels is driven by a motor. At or near an opposite (rear) end of the apparatus there is provided an assembly supporting third wheel which is rotatable about a respective axis (again substantially parallel with the ground surface) and which is moveable about a generally vertical axis so as to provide a form of steering for the apparatus. This wheel assembly wheel assembly permits the third wheel to swivel about a (substantially vertical) swivel axis which is substantially perpendicular to the third wheel axis and off-set therefrom. The apparatus includes a handle or tiller arm which is graspable by a user and which is connected directly or indirectly to main body and which is fixed in that position. Movement of the handle or tiller arm by the user therefore applies a force to the main body so as to apply a steering torque and in doing so, the third (castor) wheel swivels about its swivel axis and aligns substantially with the direction of steering. In this way, the third wheel passively assists with the steering of the apparatus which is achieved by the steering torque applied by the user via the handle or tiller arm. Such an apparatus is generally less expensive to manufacture, but is not as good when operating in tight working spaces because of the fixed handle or tiller arm and requires more (sometimes significantly more) user energy to effect a steering change. Such an apparatus is better suited when "pushing" a load, because this passive steering configuration means that the apparatus can pivot only about the connection between the load being pushed and the apparatus meaning the user has more control over both the apparatus and the load even though it can take more effort to steer.

US 2011/0109054 discloses an apparatus for transporting carts including a machine body, a steering control arranged on the body and a steering pedestal pivotally arranged with respect to the body. EP 0 854 077 describes a carriage for transporting baggage, parts and the like.

The invention is defined by the appended claims.

According to one aspect of the disclosure, we provide a load transporting apparatus including:
a main body;
at least one ground engaging first wheel positioned at or towards one end of the main body and supported for rotation about a generally horizontal axis A;
at least one wheel assembly positioned at or towards an opposite end of the main body and including a second wheel which is supported for rotation about a generally horizontal wheel axis B, wherein an orientation of the second wheel of the wheel assembly is moveable relative to the main body; and
a user graspable handle connected to the main body,
wherein in a first operational condition the user graspable handle is fixed relative to the main body and at the same time said wheel assembly is configured to permit the second wheel to swivel about a swivel axis C which is substantially perpendicular to the second wheel axis B and off-set therefrom, and
wherein in a second operational condition the user graspable handle is moveable relative to the main body and wherein said wheel assembly is configured such that movement of the user graspable handle alters the orientation of the second wheel relative to the main body,
wherein the apparatus includes a mechanism for switching between the first and second operational conditions.

In the second operational condition the user graspable handle may rotate the second wheel relative to the main body about an axis D which extends vertically or substantially vertically through the horizontal rotational axis B of the second wheel.

The axis D may extend through a plane which extends midway through the second wheel.

In the second operational condition the user graspable handle may be pivotally moveable about an axis E which intersects or substantially intersects the rotational axis B of the second wheel of the wheel assembly. Preferably the axis E is vertical or substantially vertical. Preferably the axis E extends through a plane which extends midway through the second wheel.

The axes D and E may be coaxial and/or the axis D and/or axis E may be offset from the swivel axis C.

The mechanism for switching between the first and second operational conditions of the apparatus may include a link mechanism releasably engageable at one end directly or indirectly with the user graspable handle and releasably engageable at its opposite end directly or indirectly with the wheel assembly.

The link mechanism may be moveable between first and second positions, with the first position corresponding to the first operational condition of the apparatus and the second position corresponding to the second operational condition of the apparatus

In the first operational condition of the apparatus the link mechanism may be engaged with the user graspable handle so as to fix the user graspable handle relative to the main body, whilst the link mechanism is disengaged from the wheel assembly thus permitting the second wheel to swivel about the swivel axis C

In the second operational condition of the apparatus the link mechanism may be disengaged from the user graspable handle, whilst the link mechanism is engaged with the wheel assembly, such that movement of the user graspable handle is able to alter the orientation of the second wheel relative to the main body.

The link mechanism may include first and second link parts, with the first link part releasably engageable directly or indirectly with the user graspable handle and the second link part releasably engageable directly or indirectly with the wheel assembly. Preferably the first link part is slidably moveable, either manually or by mechanically driven device. Preferably the first link part is slidable along a plane which is vertical or substantially vertical.

The user graspable handle may be mounted relative to the main body by a rotatably moveable handle support part and wherein the first link part may include a formation which engages with a corresponding formation on the rotationally moveable part when the link mechanism is in its first position so as to prevent the rotatably moveable handle support part from rotating.

The wheel assembly may include a first wheel assembly part and a second wheel assembly part which second part supports the second wheel for rotation about its axis B, wherein the second wheel assembly part is rotatably moveable relative to first part, and wherein the second link part may include a formation which engages with a corresponding formation on the second wheel assembly part when the link mechanism is in its second position so as to prevent the second wheel assembly part from rotating relative to the first wheel assembly part.

The second link part may be pivotally moveable, preferably about and axis which is horizontal or substantially horizontal,

The second link part may be supported for its pivotal movement by, on or relative to the first wheel assembly part.

The first wheel assembly part may be connected to the user graspable handle, preferably by a generally vertically extending axle or the like.

The first wheel assembly part may be connected to the rotatably moveable handle support part such that the two parts are rotationally fast with each other, such that when the apparatus is in its second operation condition rotational movement of the user graspable handle rotates the first wheel assembly part, preferably about the axis E.

The link mechanism may be biased, preferably by one or more spring members, towards its second position.

The apparatus may include a safety device which prevents the link mechanism from moving or being moved from the first to the second position or from the second to the first position, unless deactivated by a user.

The load transporting apparatus may include a pair of said ground engaging wheels positioned at or towards the end of the main body opposite the wheel assembly, said pair of wheels being rotatable about a common axis.

The load transporting apparatus may include coupling means connected to or provided on the main body for coupling to a load to be transported.

Embodiments of the invention will now be described by way of examples only with reference to the following drawings, of which:

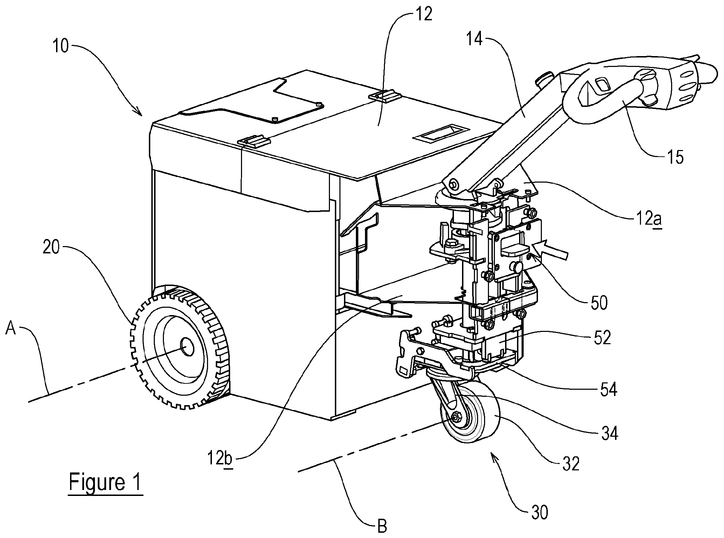

Figure 1 is a perspective view of a load transporting apparatus according to the disclosure in a first operational condition;

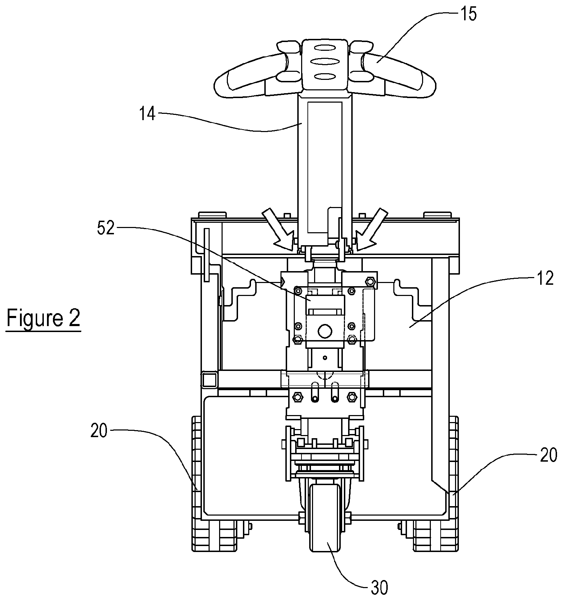

Figure 2 is a rear view of the apparatus in the first operational condition;

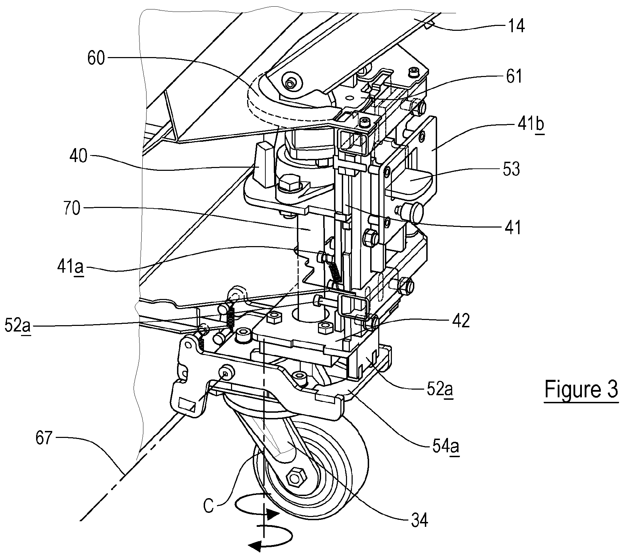

Figure 3 is a close up perspective view of part of the apparatus in the first operational condition;

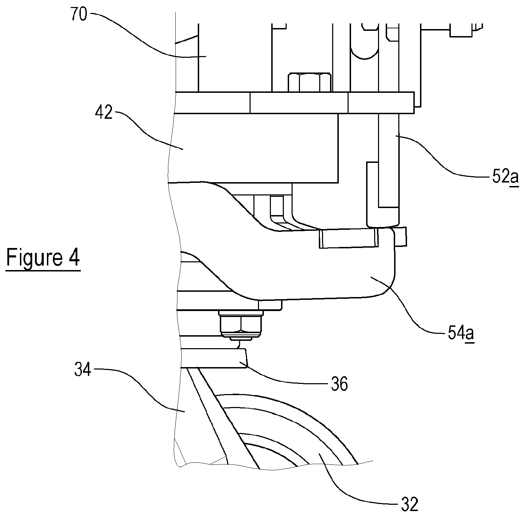

Figure 4 is a close-up side view of a part of the apparatus in the first operational condition;

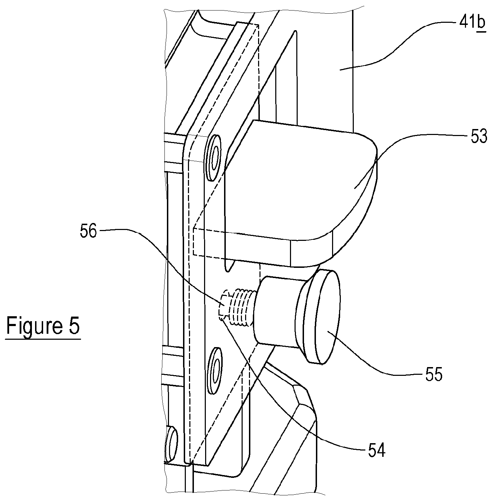

Figure 5 is a close-up perspective view of a part of the apparatus in the first operational condition;
Figure 6 is a close-up rear view of a part of the apparatus in the first operational condition;
Figure 7 is a close-up underside perspective view of a part of the apparatus in the first operational condition;

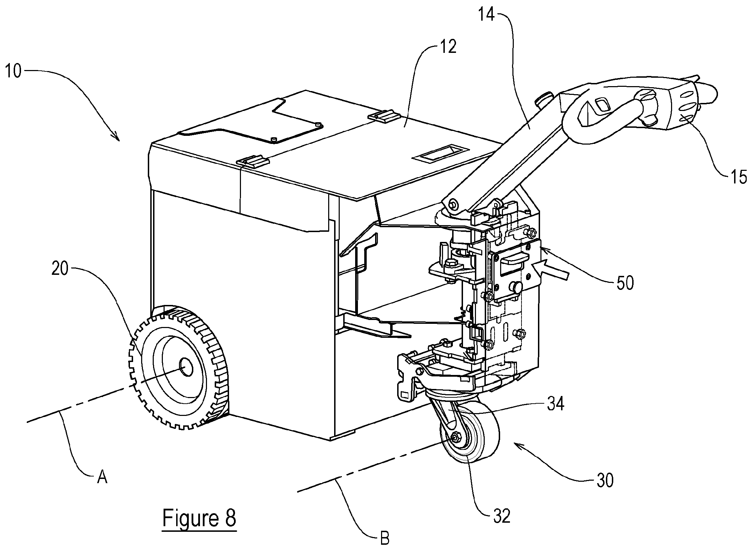

Figure 8 is a perspective view of a load transporting apparatus according to the disclosure in a second operational condition;

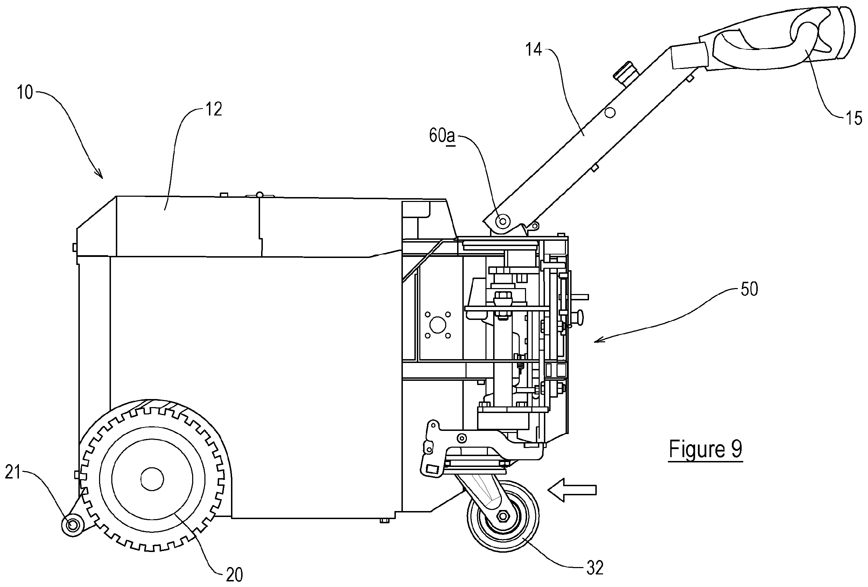

Figure 9 is a side view of the apparatus in the second operational condition;

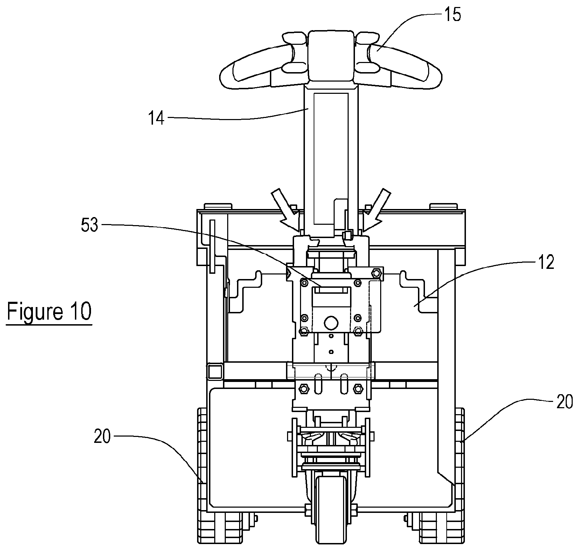

Figure 10 is a rear view of the apparatus in the second operational condition;

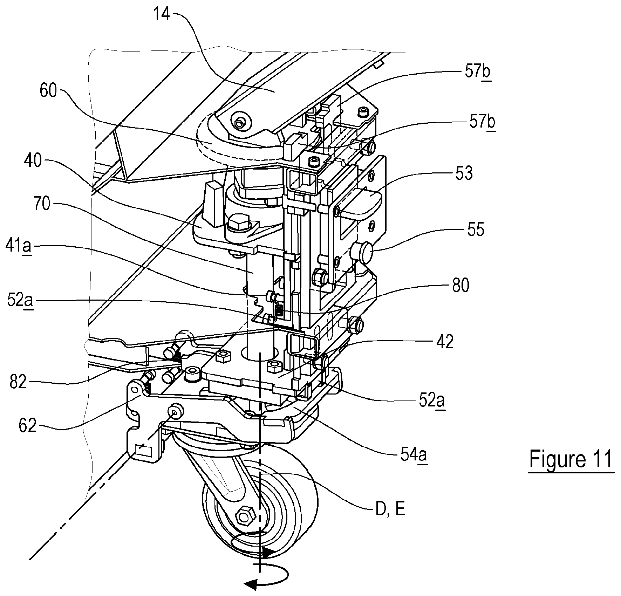

Figure 11 is a close up perspective view of part of the apparatus in the second operational condition;
Figure 12 is a close-up rear view of a part of the apparatus in the second operational condition;

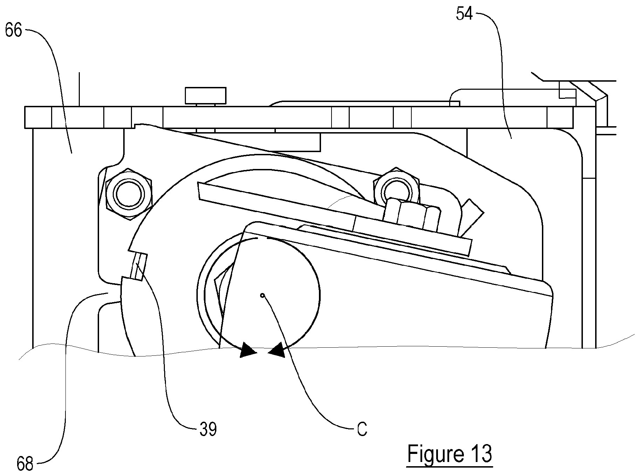

Figure 13 is a close-up underside perspective view of a part of the apparatus n the first operational condition;
Figure 14 is a close-up underside perspective view of a part of the apparatus in the second operational condition;
Figure 15 is a close-up underside perspective view of a part of the apparatus in the second operational condition; and

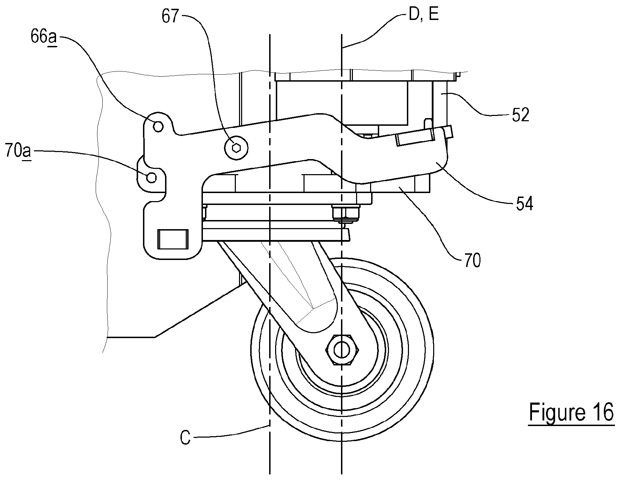

Figure 16 is a clos-up side view of the apparatus in the second operational condition.

Referring to the figures, these show a load transporting apparatus 10 including a main body 12, which in this example is fabricated from metallic sheet material, although it could be made by any suitable means and from any suitable materials. The main body 12 supports a pair of ground engaging first wheels 20 positioned at or towards one (front) end of the main body 12 which rotate about a generally horizontal axis A. Inside the main body 12 is positioned a drive system including one or more motors and suitable gearing for driving the wheels 20 in both rotational directions to as to move the apparatus 10 forwards or rearwards. The front of the main body 12 is also provided with a further wheel or wheels 21 (which are smaller than the wheels 20), the purpose of which is to assist in preventing the apparatus 10 tipping forwards when attached to a load at the front. Although not shown, the apparatus 10 may include a coupling or the like at the front of the apparatus 10 adjacent the wheels 20 for coupling to a load to be transported.

Positioned at or towards an opposite (rear) end of the main body 12 is a wheel assembly 30 which includes a wheel 32 supported for rotation about a generally horizontal wheel axis B. The orientation of the wheel 32 of the wheel assembly 30 is moveable relative to the main body 12 so as to effect or assist with steering of the apparatus 10, as will be discussed below.

The apparatus 10 includes a user graspable handle 14 which is connected to the main body 12 at a rear of the main body 12 and generally above the wheel assembly 30. The handle 14 includes a graspable part 15 at its upper free end which includes controls for controlling the forwards/rearwards movement of the apparatus 10 in use. The user graspable handle 14 is mounted relative to the main body 12 by a rotatably moveable handle support part 60. The part 60 is rotatable about an axis E which is substantially vertical, although its freedom to rotate is, as described below, inhibited in the first operational condition of the apparatus 10. The axis E intersects the rotational axis B of the wheel 32, although embodiments are envisaged where it need not do so. The handle 14 is pivotally mounted to the support part 60 about a generally horizontal axis 60a such that the graspable part 15 can move upwardly or downwardly (e.g. for permitting use by user of different heights).

The handle 14, 15, wheel assembly 32 and (as discussed later) an operational condition switching mechanism 50 are supported towards a rear of the apparatus 10 and are connected to and supported by the main body 12 between a pair of fabricated plate supports 12a, 12b which are spaced apart from each other. The plate support 12a is positioned vertically above the plate support 12b. Further supports may be utilised so as to provide adequate support for the handle 14, 15, wheel assembly 32 and the working components of the switching mechanism 50. Some such supports have been removed to aid viewing the component parts of the switching mechanism 50.

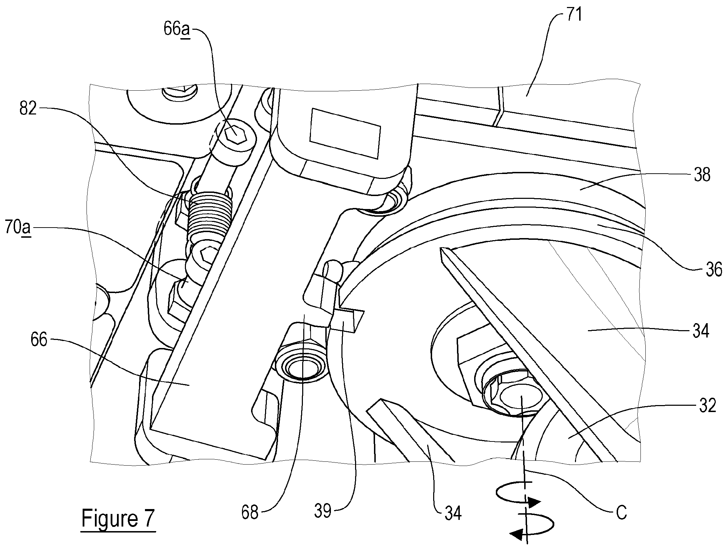

The support part 60 is supported for rotation by a part 40 (discussed later) and is connected to an axle 70 which extends downwardly from the part 60. At its lowermost end, the axle 70 is connected to a plate member 71 to which the wheel assembly 30 is connected (see figure 7). The axle 70 is supported for its rotational movement by suitable bearings provided in part 40).

Advantageously, and as will be described in greater detail below, the apparatus 10 has two operational conditions which correspond to different ways in which the apparatus 10 can be steered by a user as it is moved.

In a first operational condition the user graspable handle 14, 15 is fixed relative to the main body 12 and at the same time the wheel assembly 30 is configured to permit the wheel 30 to swivel about a swivel axis C which is substantially perpendicular to the second wheel axis B and off-set therefrom.

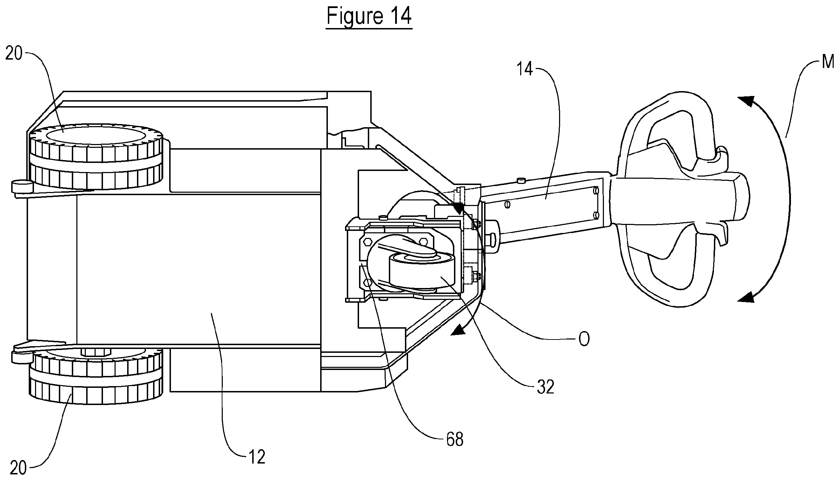

In a second operational condition the user graspable handle 14, 15 is pivotally moveable (to the left or to the right) relative to the main body 12 and the wheel assembly 30 is configured such that movement of the user graspable handle (in the direction shown by arrow M in figure 14) alters the orientation of the wheel 30 relative to the main body 12 (in the direction of arrow O in figure 14) so as to effect a change in steering angle.

In the described embodiment, the user is able to switch between these two operational conditions, depending on which best suits the desired use of the apparatus 10, by way of a switching mechanism 50, the details of which will be discussed later.

In the first operational condition, the handle 14, 15 is fixed relative to the main body 12 such that movement of the handle 14, 15 (in the direction of arrow M) applies a force to the main body 12 so as to apply a steering torque and in doing so, the wheel 32 swivels about the swivel axis C and aligns substantially with the direction of steering. In this way, the wheel 32 passively assists with the steering of the apparatus 10 which is achieved by the steering torque applied by the user via the handle 14, 15. In this operational condition, the apparatus 10 may be better suited for use in pushing loads (where the direction of travel is forwards, i.e. opposite to the location of the handle 14, 15) and where there is more space for manoeuvring of the apparatus 10.

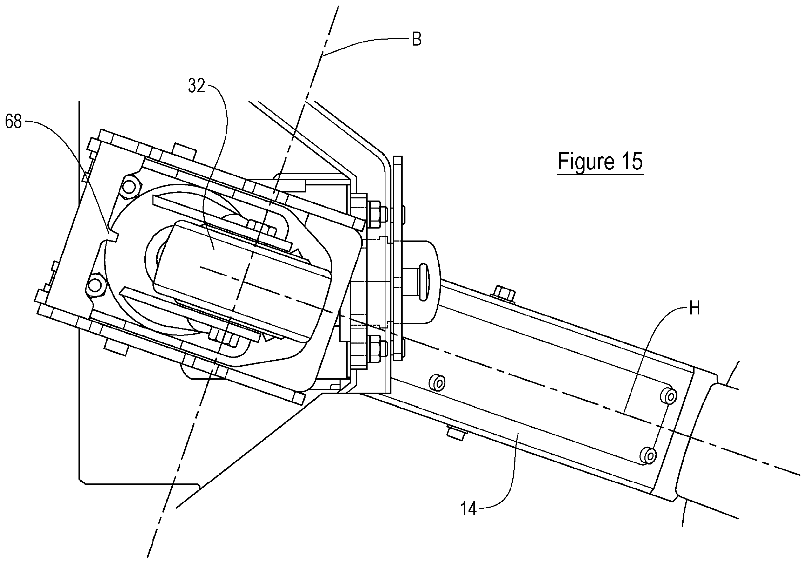

In the second operational condition, the handle 14, 15 is, in effect, connected directly to the wheel assembly 30 and is pivotally moveable with the part 60 about its axis E. Pivotal movement of the handle 14, 15 relative to the main body 12 of the apparatus 10 therefore controls the angular position of the wheel 32 relative to the main body 12 (by rotating the wheel about an axis D, which in this example is coaxial with the axis E and which extends through a plane which extends midway through the wheel 30). The axes D and E intersect the axis B and are therefore offset from the swivel axis C. In this way, the direction of movement of the apparatus 10 can be controlled by the user by moving the handle 14, 15. In this way, the wheel 32 actively assists with the steering of the apparatus 10 because it is connected directly to the handle 14, 15. During all steering movements, the handle 14, 15 and the wheel 32 both sit in the same generally vertical plane H (see figure 15). In this operational condition, the apparatus 10 may be used in tight working spaces because the pivotability of the handle 14, 15 relative to the main body 12 requires minimal user energy to effect a steering change, and a much tighter turning circle can be achieved.

The mechanism 50 for switching between the first and second operational conditions of the apparatus 10 includes a link mechanism having first and second link parts 52, 54. The first link part 52 is supported for sliding movement by a fabricated frame including upper 40 and lower 42 frame parts which are connected by a vertically extending frame part 41. The fabricated frame is connected to the rear of the main body 12, directly beneath the handle 14 and in between the supports plates 12a, 12b. The first link part 52 is slidable along a plane which is vertical or substantially vertical. In this example, the link part 52 is manually slidable by a user between two positions, although it could be moveable by a mechanically driven device. In order to move the link part 52, a user grasps a projecting lever part 53 which projects rearwardly and either moves it upwardly or downwardly.

A first position of the link 52 corresponds to a position of the link 52 which is closer to the wheel assembly 30 whilst a second position of the link 52 corresponds to a position of the link 52 further away from the wheel assembly 30. The first position of the link 52 corresponds to the first operational condition of the apparatus 10 whilst the second position of the link 52 corresponds to the second operational condition of the apparatus 10.

In this embodiment, the link part 52 is biased towards its second position. In the present example, this is achieved at least in part by a pair of springs 80 (one positioned to each lateral side of the apparatus), each spring 80 being held at one end on or by a projection 41a on a forwarding facing part of the frame part 41 and held at its opposite end on or by a projection 51a provided on the link part 52. The springs 80 are tensioned when the link part 52 is moved towards its first position, hence urging the link part 52 back towards its second position.

In this example, the apparatus 10 includes a safety device which prevents the link part 52 from moving or being moved from its first to its second position. The safety device is a handle 55 which includes a projection 56 which passes through an aperture in a frame part 41b and engages with an aperture 54 in the link part 52 so as to hold the link part 52 in the first position. In order for the link part 52 to be moved to its second position, the handle 55 must be pulled rearwardly. The handle 55 is preferably biased by a suitable spring (not shown) towards the link part 52 such that when the link part 52 is moved to its first position, the projection 56 automatically engages the aperture 54.

In envisaged embodiments the or a further safety device may be provided for preventing the link part 52 from moving or being moved from the second to the first position, unless deactivated by a user.

The wheel assembly 30 includes a first wheel assembly part 38 and a second wheel assembly part 36 which second part supports the second wheel 30 for rotation about its axis B between a pair of downwardly extending wheel supports 34. The first wheel assembly part 38 is fixed, e.g. by suitable fasteners, to a downwardly facing surface of the part 71 and is thus rotationally fast therewith. The second wheel assembly part 36 is connected to and supported by the first wheel assembly part 38 but is rotatably moveable relative to first wheel assembly part about the swivel axis C.

The second link part 54 is positioned mostly above and supported for pivotal movement by the part 71. The second link part 54 is pivotally moveable about an axis 67 which is horizontal or substantially horizontal. The axis 67 is positioned closer to the main body 12 than the swivel axis C. A free end 54a of the second link part 54 is positioned adjacent and under a lower free end 52a of the link 52 and the two free ends 52a, 54a engage each other such that vertical movement of the link part 52 downwardly causes pivotal movement of the link part 54 about its axis 67.

The link part 54 adopts one of two extreme positions which correspond to the two positions of the link part 52. In a first position of the link part 54 the free end 54a adopts a position which is closer to the wheel assembly 30 whilst a second position of the link part 54 corresponds to a position of the free end 54a being further away from the wheel assembly 30.

The link 54 is biased towards its second position. In the present example, this is achieved at least in part by a pair of springs 82 (one positioned to each lateral side of the apparatus), each spring 82 being held at one end on or by a projection 66a provided on a portion of the link part 54 which is closer to the main body 12 than the axis 67 and held at its opposite end on or by a projection 70a provided on the part 71. The springs 82 are tensioned when the link part 54 is moved towards its first position by the link part 52, i.e. when the free end 54a is moved downwardly, hence urging the link part 54 back towards its second position.

A portion 62 of the link part 54 which is positioned between the axis 67 and the main body 12 supports a downwardly extending formation or part 66 which extends past (at either side of) the part 71 and is positioned adjacent a periphery of the rotatable second wheel assembly part 36. This formation 66 is provided with a projection 68 which extends rearwardly and is sized to engage in and with a recess 39 provided in the periphery of the rotatable second wheel assembly part 36. When the projection 68 is engaged in the recess 39, the second wheel assembly part 36 is held against rotation about the swivel axis C.

An uppermost end of the link part 52 is configured selectively to engage with the rotatably moveable handle support part 60 to either permit it to rotate about the axis D, E or to prevent such rotational movement. In the latter condition, prevention of rotation of the rotatably moveable handle support part 60 would thus prevent the handle 14, 15 from pivoting relative to the body 12 in the direction of arrow M.

This is achieved by the uppermost end of the link part 52 being provided with two upwardly extending portions 57a, 57b between which is defined an opening. Either side of the opening is provided with abutment portions 58a, 58b which face each other. Beneath each abutment portion 58a, 58b is a cutaway opening 59a, 59b. The rotatably moveable handle support part 60 is provided with a radially outwardly and rearwardly extending projection 61. Depending on the position of the link part 52, the projection 61 adopts two positions, either vertically aligned with the abutment portions 58a, 58b or vertically aligned with the cutaway openings 59a, 59b.

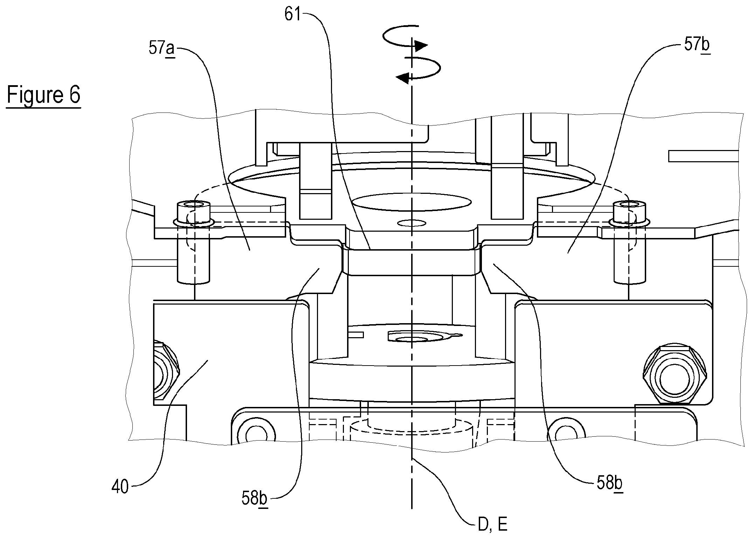

When the link part 52 is in its first position (i.e. lowermost position) with the wheel 32 aligned forwardly, the projection 61 sits between the abutment portions 58a, 58b (see figure 6). In this position, the rotational movement of the rotatably moveable handle support part 60 is prevented, because the portion 61 engages either the abutment portion 58a or the abutment portion 58b, meaning that the handle 14, 15 is not free to rotate about the axis D, E.

At the same time, the lowermost end 54a of the link part 52 has caused the link part 54 to pivot about the axis 67 disengaging the projection 68 from the recess 38 and meaning that the second wheel assembly part 36 and thus the wheel 30 are free to swivel about the swivel axis C.

When it is desired to switch to the second operational condition of the apparatus 10, the user must pull the handle 55 outwardly away from the link part 52. The user then moves the lever 53 upwardly assisted by the stored energy in the springs 80 and 82. In envisaged embodiments, once handle 55 has been pulled outwardly, the lever 53 may move upwardly under the force of the springs 80, 82 without the user having to apply any upward force.

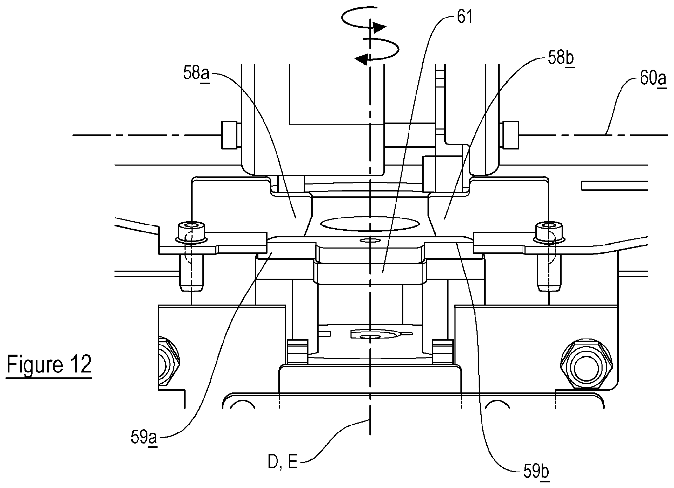

When the link part 52 is in its second position (i.e. uppermost position) with the wheel 32 aligned forwardly, the projection 61 sits in the cutaway openings 59a, 59b (see figure 12), with the abutment portions 58a, 58b positioned above and out of the way. In this position, the rotational movement of the rotatably moveable handle support part 60 is permitted, because during such rotational movement, no engagement occurs between the portion 61 and the link part 52. This means that the handle 14, 15 is free to rotate about the axis D, E. Rotational movement of the handle in this position also effects rotation of the axle 70 about the axis D, E.

At the same time, the lowermost end 54a of the link part 52 has moved upwardly permitting the link part 54 to pivot in the opposite direction about the axis 67. This pivoting movement moves the projection 68 towards the periphery of the second wheel assembly part 36 and eventually into engagement with the recess 38 (once the wheel 30 aligns substantially perpendicularly with the wheel axis A, which would happen once the apparatus is moved forwardly). Once this engagement occurs, the second wheel assembly part 36 becomes rotationally fast with the first wheel assembly part 38 and thus the axle 70. This means that as the handle 14 is pivoted about the axis D, E, so is the wheel 30.

## Claims

1. A load transporting apparatus (10) including:
a main body (12);
at least one ground engaging first wheel (20) positioned at or towards one end of the main body and supported for rotation about a generally horizontal axis A;
at least one wheel assembly (30) positioned at or towards an opposite end of the main body (12) and including a second wheel (32) which is supported for rotation about a generally horizontal wheel axis B, wherein an orientation of the second wheel of the wheel assembly is moveable relative to the main body; and
a user graspable handle (14) connected to the main body (12),
wherein in a first operational condition the user graspable handle (14) is fixed relative to the main body (12) and at the same time said wheel assembly (30) is configured to permit the second wheel (32) to swivel about a swivel axis C which is substantially perpendicular to the axis B and off-set therefrom,
wherein in a second operational condition the user graspable handle (14) is moveable relative to the main body (12) and wherein said wheel assembly (30) is configured such that movement of the user graspable handle (14) alters the orientation of the second wheel relative to the main body,
wherein the apparatus includes a mechanism (50) for switching between the first and second operational conditions,
wherein the mechanism (50) for switching between the first and second operational conditions of the apparatus includes a link mechanism releasably engageable at one end directly or indirectly with the user graspable handle (14) and releasably engageable at its opposite end directly or indirectly with the wheel assembly (30), and
wherein the link mechanism (50) includes first and second link parts (52, 54), with the first link part (52) releasably engageable directly or indirectly with the user graspable handle (14) and the second link part (54) releasably engageable directly or indirectly with the wheel assembly (30),
**characterised in that** the first link part (52) is slidably moveable, either manually or by mechanically driven device, wherein the first link part is slidable along a plane which is substantially vertical.

2. An apparatus (10) according to claim 1 wherein in the second operational condition the user graspable handle (14) rotates the second wheel (32) relative to the main body (12) about an axis D which extends vertically or substantially vertically through the horizontal rotational axis B of the second wheel (32), and optionally
wherein the axis D extends through a plane which extends midway through the second wheel (32).

3. An apparatus (10) according to any preceding claim wherein in the second operational condition the user graspable handle (14) is pivotally moveable about an axis E which intersects the rotational axis B of the second wheel (32) of the wheel assembly (30), preferably wherein the axis E is vertical or substantially vertical, and most preferably wherein the axis E extends through a plane which extends midway through the second wheel (32), and optionally
wherein the axes D and E are coaxial and/or wherein the axis D and/or axis E is/are offset from the swivel axis C.

4. An apparatus (10) according to any preceding claim wherein the link mechanism is moveable between first and second positions, with the first position corresponding to the first operational condition of the apparatus and the second position corresponding to the second operational condition of the apparatus

5. An apparatus (10) according to any preceding claim wherein in the first operational condition of the apparatus the link mechanism is engaged with the user graspable handle (14) so as to fix the user graspable handle relative to the main body (12), whilst the link mechanism is disengaged from the wheel assembly (30) thus permitting the second wheel (32) to swivel about the swivel axis C.

6. An apparatus (10) according to any preceding claim wherein in the second operational condition of the apparatus the link mechanism is disengaged from the user graspable handle (14), whilst the link mechanism is engaged with the wheel assembly (30), such that movement of the user graspable handle (14) is able to alter the orientation of the second wheel (32) relative to the main body (12).

7. An apparatus (10) according to any preceding claim wherein the user graspable handle (14) is mounted relative to the main body (12) by a rotatably moveable handle support part (60) and wherein the first link part (52) includes a formation (66) which engages with a corresponding formation (39) on the rotationally moveable handle support part when the link mechanism is in its first position so as to prevent the rotatably moveable handle support part (60) from rotating.

8. An apparatus (10) according to any preceding claim wherein the wheel assembly (30) includes a first wheel assembly part (38) and a second wheel assembly part (36) which second wheel assembly part supports the second wheel (32) for rotation about its axis **B,** wherein the second wheel assembly part is rotatably moveable relative to first wheel assembly part, and wherein the second link part (54) includes a formation (68) which engages with a corresponding formation (39) on the second wheel assembly part (36) when the link mechanism is in its second position so as to prevent the second wheel assembly part from rotating relative to the first wheel assembly part.

9. An apparatus (10) according to any preceding claim wherein the second link part (54) is pivotally moveable, preferably about an axis which is horizontal or substantially horizontal,

10. An apparatus (10) according to claim 8 wherein the second link part (54) is supported for its pivotal movement by, on or relative to the first wheel assembly part (38).

11. An apparatus (10) according to claim 8, or claims 9 or 10 as dependent on claim 8, wherein the first wheel assembly part (38) is connected to the user graspable handle (14), preferably by a generally vertically extending axle (70) or the like.

12. An apparatus (10) according to claim 8, or claims 9, 10 or 11 as dependent on claim 8, wherein the first wheel assembly part (38) is connected to the rotatably moveable handle support part (60) such that said two parts are rotationally fast with each other, such that when the apparatus is in its second operation condition rotational movement of the user graspable handle (14) rotates the first wheel assembly part (38), preferably about the axis E.

13. An apparatus (10) according to any preceding claim wherein the link mechanism is biased, preferably by one or more spring members (80), towards its second position, and / or optionally
wherein the apparatus includes a safety device which prevents the link mechanism from moving or being moved from the first to the second position or from the second to the first position, unless deactivated by a user.

14. A load transporting apparatus (10) according to any preceding claim including a pair of said ground engaging first wheels (20) positioned at or towards the end of the main body (12) opposite the wheel assembly (30), said pair of first wheels being rotatable about a common axis, and / or optionally
including coupling means connected to or provided on the main body (12) for coupling to a load to be transported.

## Patentansprüche

1. Lasttransportvorrichtung (10), umfassend:
Einen Hauptkörper (12);
mindestens ein den Boden berührendes erstes Rad (20), welches an oder nahe einem Ende des Hauptkörpers angeordnet und um eine im Wesentlichen horizontale Achse A drehbar gelagert ist;
mindestens eine Radbaugruppe (30), die an oder in Richtung eines gegenüberliegenden Endes des Hauptkörpers (12) angeordnet ist und ein zweites Rad (32) umfasst, welches drehbar um eine im Wesentlichen horizontale Radachse B gelagert ist, wobei eine Ausrichtung des zweiten Rads der Radbaugruppe relativ zum Hauptkörper verstellbar ist; und
einen für den Benutzer greifbaren Griff (14), der mit dem Hauptkörper (12) verbunden ist.
wobei in einem ersten Betriebszustand der vom Benutzer greifbare Griff (14) relativ zum Hauptkörper (12) fixiert ist und gleichzeitig die Radbaugruppe (30) so konfiguriert ist, dass sie ein Schwenken des zweiten Rads (32) um eine Schwenkachse C ermöglicht, die im Wesentlichen senkrecht zur Achse B verläuft und gegenüber dieser versetzt ist,
wobei in einem zweiten Betriebszustand der vom Benutzer greifbare Griff (14) relativ zum Hauptkörper (12) beweglich ist und die Radbaugruppe (30) so konfiguriert ist, dass die Bewegung des vom Benutzer greifbaren Griffs (14) die Ausrichtung des zweiten Rades relativ zum Hauptkörper verändert,
wobei die Vorrichtung einen Mechanismus (50) zum Umschalten zwischen dem ersten und dem zweiten Betriebszustand umfasst,
wobei der Mechanismus (50) zum Umschalten zwischen dem ersten und dem zweiten Betriebszustand der Vorrichtung einen Verbindungsmechanismus umfasst, der an einem Ende direkt oder indirekt lösbar mit dem vom Benutzer greifbaren Griff (14) und an seinem gegenüberliegenden Ende direkt oder indirekt lösbar mit der Radbaugruppe (30) in Eingriff gebracht werden kann, und
wobei der Verbindungsmechanismus (50) erste und zweite Verbindungsteile (52, 54) umfasst, wobei das erste Verbindungsteil (52) direkt oder indirekt lösbar mit dem vom Benutzer greifbaren Griff (14) und das zweite Verbindungsteil (54) direkt oder indirekt lösbar mit der Radbaugruppe (30) in Eingriff gebracht werden kann,
**dadurch gekennzeichnet, dass** das erste Verbindungsteil (52) entweder manuell oder mittels einer mechanisch angetriebenen Vorrichtung verschiebbar beweglich ist, wobei das erste Verbindungsteil entlang einer im wesentlichen vertikalen Ebene verschiebbar ist.

2. Vorrichtung (10) nach Anspruch 1, wobei im zweiten Betriebszustand der vom Benutzer greifbare Griff (14) das zweite Rad (32) relativ zum Hauptkörper (12) um eine Achse D dreht, die sich vertikal oder im Wesentlichen vertikal durch die horizontale Drehachse B des zweiten Rades (32) erstreckt, und optional
wobei sich die Achse D durch eine Ebene erstreckt, die mittig durch das zweite Rad (32) verläuft.

3. Vorrichtung (10) nach einem vorhergehenden Anspruch, wobei im zweiten Betriebszustand, der vom Benutzer greifbare Griff (14) um eine Achse E schwenkbar ist, welche die Drehachse B des zweiten Rades (32) der Radbaugruppe (30) schneidet, wobei die Achse E vorzugsweise vertikal oder im Wesentlichen vertikal verläuft und wobei sich die Achse E besonders bevorzugt durch eine Ebene erstreckt, die sich mittig durch das zweite Rad (32) erstreckt, und optional
wobei die Achsen D und E koaxial sind und/oder wobei die Achse D und/oder die Achse E gegenüber der Schwenkachse C versetzt ist/sind.

4. Vorrichtung (10) nach einem vorhergehenden Anspruch, wobei der Verbindungsmechanismus zwischen einer ersten und einer zweiten Position beweglich ist, wobei die erste Position dem ersten Betriebszustand der Vorrichtung entspricht und die zweite Position dem zweiten Betriebszustand der Vorrichtung entspricht.

5. Vorrichtung (10) nach einem vorhergehenden Anspruch, wobei im ersten Betriebszustand der Vorrichtung der Verbindungsmechanismus mit dem vom Benutzer greifbaren Griff (14) in Eingriff steht, um den vom Benutzer greifbaren Griff relativ zum Hauptkörper (12) zu fixieren, während der Verbindungsmechanismus außer Eingriff mit der Radbaugruppe (30) steht, wodurch das zweite Rad (32) um die Schwenkachse C schwenken kann.

6. Vorrichtung (10) nach einem vorhergehenden Anspruch, wobei im zweiten Betriebszustand der Vorrichtung der Verbindungsmechanismus von dem vom Benutzer greifbaren Griff (14) entkoppelt ist, während der Verbindungsmechanismus mit der Radbaugruppe (30) gekoppelt ist, sodass eine Bewegung des vom Benutzer greifbaren Griffs (14) die Ausrichtung des zweiten Rads (32) relativ zum Hauptkörper (12) verändern kann.

7. Vorrichtung (10) nach einem vorhergehenden Anspruch, wobei der vom Benutzer greifbare Griff (14) mittels eines drehbar beweglichen Griffstützteils (60) relativ zum Hauptkörper (12) angebracht ist und wobei das erste Verbindungsteil (52) eine Ausformung (66) aufweist, die mit einer entsprechenden Ausformung (39) an dem drehbar beweglichen Griffstützteil in Eingriff gelangt, wenn sich der Verbindungsmechanismus in seiner ersten Position befindet, um so eine Drehung des drehbar beweglichen Griffstützteils (60) zu verhindern.

8. Vorrichtung (10) nach einem vorhergehenden Anspruch, wobei die Radbaugruppe (30) einen ersten Radbaugruppenteil (38) und einen zweiten Radbaugruppenteil (36) umfasst, wobei der zweite Radbaugruppenteil das zweite Rad (32) drehbar um dessen Achse B lagert, wobei der zweite Radbaugruppenteil relativ zum ersten Radbaugruppenteil drehbar beweglich ist, und wobei der zweite Verbindungsteil (54) eine Ausformung (68) aufweist, die mit einer entsprechenden Ausformung (39) am zweiten Radbaugruppenteil (36) in Eingriff gelangt, wenn sich der Verbindungsmechanismus in seiner zweiten Position befindet, um eine Drehung des zweiten Radbaugruppenteils relativ zum ersten Radbaugruppenteil zu verhindern.

9. Vorrichtung (10) nach einem vorhergehenden Anspruch, wobei das zweite Verbindungsteil (54) vorzugsweise um eine horizontale oder im Wesentlichen horizontale Achse schwenkbar beweglich ist.

10. Vorrichtung (10) nach Anspruch 8, wobei das zweite Verbindungsteil (54) für seine Schwenkbewegung an, auf oder relativ zu dem ersten Radbaugruppenteil (38) gelagert ist.

11. Vorrichtung (10) nach Anspruch 8 oder nach Anspruch 9 oder 10 in Abhängigkeit von Anspruch 8, wobei das erste Radbaugruppenteil (38) mit dem vom Benutzer greifbaren Griff (14) vorzugsweise über eine sich im Wesentlichen vertikal erstreckende Achse (70) oder dergleichen verbunden ist.

12. Vorrichtung (10) nach Anspruch 8 oder nach einem der Ansprüche 9, 10 oder 11 in Abhängigkeit von Anspruch 8, wobei das erste Radbaugruppenteil (38) mit dem drehbar beweglichen Griffstützteil (60) derart verbunden ist, dass die beiden Teile drehfest miteinander verbunden sind, sodass bei der Vorrichtung in ihrem zweiten Betriebszustand eine Drehbewegung des vom Benutzer greifbaren Griffs (14) das erste Radbaugruppenteil (38) vorzugsweise um die Achse E dreht.

13. Vorrichtung (10) nach einem vorhergehenden Anspruch, wobei der Verbindungsmechanismus, vorzugsweise durch ein oder mehrere Federelemente (80), in seine zweite Position vorgespannt ist, und/oder optional
wobei die Vorrichtung eine Sicherheitseinrichtung umfasst, die verhindert, dass sich der Verbindungsmechanismus von der ersten in die zweite Position oder von der zweiten in die erste Position bewegt oder bewegt wird, sofern er nicht von einem Benutzer deaktiviert wird.

14. Lastentransportvorrichtung (10) nach einem vorhergehenden Anspruch, die ein Paar der besagten, den Boden berührenden ersten Räder (20) umfasst, die an oder nahe dem Ende des Hauptkörpers (12) angeordnet sind, welches der Radbaugruppe (30) gegenüberliegt, wobei dieses Paar erster Räder um eine gemeinsame Achse drehbar ist, und/oder optional
Kopplungsmitteln umfasst, die mit dem Hauptkörper (12) verbunden oder an diesem vorgesehen sind, um eine Kopplung mit einer zu transportierenden Last zu ermöglichen.

## Revendications

1. Appareil de transport de charge (10), comprenant :
un corps principal (12) ;
au moins une première roue de contact avec le sol (20) positionnée au niveau d'une extrémité du corps principal ou vers celle-ci et supportée en rotation autour d'un axe A généralement horizontal ;
au moins un ensemble roue (30) positionné au niveau d'une extrémité opposée du corps principal (12) ou vers celle-ci et comportant une seconde roue (32) qui est supportée en rotation autour d'un axe de roue B généralement horizontal, une orientation de la seconde roue de l'ensemble roue étant mobile par rapport au corps principal ; et
une poignée saisissable par l'utilisateur (14) reliée au corps principal (12),
dans un premier état fonctionnel, la poignée saisissable par l'utilisateur (14) étant fixe par rapport au corps principal (12) et, en même temps, ledit ensemble roue (30) étant configuré pour permettre à la seconde roue (32) de pivoter librement autour d'un axe de pivotement libre C qui est sensiblement perpendiculaire à l'axe B et décalé par rapport à celui-ci,
dans un second état fonctionnel, la poignée saisissable par l'utilisateur (14) étant mobile par rapport au corps principal (12) et ledit ensemble roue (30) étant configuré de telle sorte qu'un mouvement de la poignée saisissable par l'utilisateur (14) modifie l'orientation de la seconde roue par rapport au corps principal,
l'appareil comprenant un mécanisme (50) permettant de commuter entre les premier et second états fonctionnels,
le mécanisme (50) permettant de commuter entre les premier et second états fonctionnels de l'appareil comprenant un mécanisme de liaison pouvant directement ou indirectement venir en prise amovible au niveau d'une extrémité avec la poignée saisissable par l'utilisateur (14) et pouvant directement ou indirectement venir en prise amovible au niveau de son extrémité opposée avec l'ensemble roue (30), et
le mécanisme de liaison (50) comprenant des première et seconde parties de liaison (52, 54), la première partie de liaison (52) pouvant directement ou indirectement venir en prise amovible avec la poignée saisissable par l'utilisateur (14) et la seconde partie de liaison (54) pouvant directement ou indirectement venir en prise amovible avec l'ensemble roue (30),
l'appareil étant **caractérisé en ce que** la première partie de liaison (52) est mobile coulissante, soit manuellement, soit par un dispositif entraîné mécaniquement, la première partie de liaison pouvant coulisser le long d'un plan qui est sensiblement vertical.

2. Appareil (10) selon la revendication 1, dans le second état fonctionnel, la poignée saisissable par l'utilisateur (14) faisant tourner la seconde roue (32) par rapport au corps principal (12) autour d'un axe D qui s'étend verticalement ou sensiblement verticalement à travers l'axe de rotation B horizontal de la seconde roue (32), et éventuellement
l'axe D s'étendant à travers un plan qui s'étend à mi-chemin à travers la seconde roue (32).

3. Appareil (10) selon l'une quelconque des revendications précédentes, dans le second état fonctionnel, la poignée saisissable par l'utilisateur (14) étant mobile pivotante autour d'un axe E qui coupe l'axe de rotation B de la seconde roue (32) de l'ensemble roue (30), de préférence l'axe E étant vertical ou sensiblement vertical, et plus préférablement l'axe E s'étendant à travers un plan qui s'étend à mi-chemin à travers la seconde roue (32), et éventuellement
les axes D et E étant coaxiaux et/ou l'axe D et/ou l'axe E étant décalé par rapport à l'axe de pivotement libre C.

4. Appareil (10) selon l'une quelconque des revendications précédentes, le mécanisme de liaison étant mobile entre des première et seconde positions, la première position correspondant au premier état fonctionnel de l'appareil et la seconde position correspondant au second état fonctionnel de l'appareil.

5. Appareil (10) selon l'une quelconque des revendications précédentes, dans le premier état fonctionnel de l'appareil, le mécanisme de liaison étant en prise avec la poignée saisissable par l'utilisateur (14) de manière à fixer la poignée saisissable par l'utilisateur par rapport au corps principal (12), tandis que le mécanisme de liaison est désengagé de l'ensemble roue (30), permettant ainsi à la seconde roue (32) de pivoter librement autour de l'axe de pivotement libre C.

6. Appareil (10) selon l'une quelconque des revendications précédentes, dans le second état fonctionnel de l'appareil, le mécanisme de liaison étant désengagé de la poignée saisissable par l'utilisateur (14), tandis que le mécanisme de liaison est en prise avec l'ensemble roue (30), de telle sorte qu'un mouvement de la poignée saisissable par l'utilisateur (14) puisse modifier l'orientation de la seconde roue (32) par rapport au corps principal (12).

7. Appareil (10) selon l'une quelconque des revendications précédentes, la poignée saisissable par l'utilisateur (14) étant montée par rapport au corps principal (12) par une partie de support de poignée mobile en rotation (60) et la première partie de liaison (52) comprenant une configuration (66) qui vient en prise avec une configuration correspondante (39) sur la partie de support de poignée mobile en rotation lorsque le mécanisme de liaison est dans sa première position de manière à empêcher la partie de support de poignée mobile en rotation (60) de tourner.

8. Appareil (10) selon l'une quelconque des revendications précédentes, l'ensemble roue (30) comprenant une première partie d'ensemble roue (38) et une seconde partie d'ensemble roue (36), la seconde partie d'ensemble roue supportant la seconde roue (32) en rotation autour de son axe B, la seconde partie d'ensemble roue étant mobile en rotation par rapport à la première partie d'ensemble roue, et la seconde partie de liaison (54) comprenant une configuration (68) qui vient en prise avec une configuration correspondante (39) sur la seconde partie d'ensemble roue (36) lorsque le mécanisme de liaison est dans sa seconde position de manière à empêcher la seconde partie d'ensemble roue de tourner par rapport à la première partie d'ensemble roue.

9. Appareil (10) selon l'une quelconque des revendications précédentes, la seconde partie de liaison (54) étant mobile pivotante, de préférence autour d'un axe qui est horizontal ou sensiblement horizontal.

10. Appareil (10) selon la revendication 8, la seconde partie de liaison (54) étant supportée pour son mouvement de pivotement par la première partie d'ensemble roue (38) ou sur celle-ci ou par rapport à celle-ci.

11. Appareil (10) selon la revendication 8, ou les revendications 9 ou 10 lorsqu'elles dépendent de la revendication 8, la première partie d'ensemble roue (38) étant reliée à la poignée saisissable par l'utilisateur (14), de préférence par un axe s'étendant généralement verticalement (70) ou analogue.

12. Appareil (10) selon la revendication 8, ou les revendications 9, 10 ou 11 lorsqu'elles dépendent de la revendication 8, la première partie d'ensemble roue (38) étant reliée à la partie de support de poignée mobile en rotation (60) de telle sorte que lesdites deux parties soient solidaires en rotation l'une de l'autre, de telle sorte que, lorsque l'appareil est dans son second état fonctionnel, un mouvement de rotation de la poignée saisissable par l'utilisateur (14) fasse tourner la première partie d'ensemble roue (38), de préférence autour de l'axe E.

13. Appareil (10) selon l'une quelconque des revendications précédentes, le mécanisme de liaison étant sollicité, de préférence par un ou plusieurs éléments de ressort (80), vers sa seconde position, et/ou éventuellement
l'appareil comprenant un dispositif de sécurité qui empêche le mécanisme de liaison de se déplacer ou d'être déplacé de la première à la seconde position ou de la seconde à la première position, à moins d'être désactivé par un utilisateur.

14. Appareil de transport de charge (10) selon l'une quelconque des revendications précédentes, comprenant une paire desdites premières roues de contact avec le sol (20) positionnées au niveau de l'extrémité du corps principal (12) ou vers celle-ci, à l'opposé de l'ensemble roue (30), ladite paire de premières roues étant mobile en rotation autour d'un axe commun, et/ou éventuellement
comprenant un moyen d'accouplement relié au corps principal (12) ou situé sur celui-ci pour l'accouplement à une charge à transporter.
